# EUROPÄISCHE PATENTSCHRIFT

(11) **EP 0 900 331 B1**
(45) Veröffentlichungstag und Bekanntmachung des Hinweises auf die Patenterteilung: **05.03.2003**
(21) Anmeldenummer: 98902945.9
(22) Anmeldetag: 09.01.1998
(51) Int. Cl.: F02M 37/10

(54) **VORRICHTUNG ZUM FÖRDERN VON KRAFTSTOFF AUS EINEM KRAFTSTOFFTANK**
DEVICE FOR SUPPLYING FUEL FROM A FUEL TANK
DISPOSITIF D'ALIMENTATION EN CARBURANT A PARTIR D'UN RESERVOIR DE CARBURANT

(30) Priorität: 10.03.1997 DE 19709780
(43) Veröffentlichungstag der Anmeldung: 10.03.1999
(73) Patentinhaber: ROBERT BOSCH GMBH, 70442 Stuttgart (DE)
(72) Erfinder: FRANK, Kurt, D-73614 Schorndorf (DE); GABAUER, Wolfgang, D-71679 Asperg (DE)
(86) Internationale Anmeldenummer: DE9800055
(87) Internationale Veröffentlichungsnummer: WO98040619

(56) Entgegenhaltungen:
- EP-A- 0 702 142
- EP-A- 0 798 458
- DE-A- 4 444 854
- FR-A- 2 636 098
- GB-A- 2 174 651
- US-A- 4 672 937
- US-A- 5 170 764

## Beschreibung

### Stand der Technik

Die Erfindung betrifft eine Vorrichtung zum Fördern von Kraftstoff aus einem Kraftstofftank der im Oberbegriff des Anspruchs 1 definierten Gattung (vergleiche mit US-A-4 672 937, Fig. 2; insbesondere Ablauföffnung 142).

Bei einer Kraftstoffördervorrichtungen für Kraftfahrzeuge, auch Fördermodule genannt, wie sie z.B. aus der DE 44 44 854 A1 bekannt sind, bildet der von einem Flansch abgeschlossene Reservetopf mit integrierter Förderpumpe und integriertem Tankstandsgeber eine komplette Baueinheit, die in den Kraftstofftank eingesetzt und in diesem befestigt wird. Die aus dem Kraftstofftank herausgeführte Kraftstoff-Förderleitung zur Brennkraftmaschine und die von der Brennkraftmaschine kommende, in den Kraftstofftank hineingeführte Kraftstoff-Rücklaufleitung sind auf am Flansch des Reservetopfs ausgebildete Anschlußstutzen aufgesteckt. Über entsprechende Öffnungen oder Pumpeneinheiten, z.B. Saugstrahlpumpen, steht der Reservetopf mit dem Tankinhalt des Kraftstofftanks in Verbindung und wird ständig mit Kraftstoff nachgefüllt, der bei Betrieb der Brennkraftmaschine von der Förderpumpe aus dem Reservetopf angesaugt und in die Förderleitung zur Brennkraftmaschine gepumpt wird.

Im Servicefall, z.B. bei defekter Förderpumpe oder defektem Tankstandsgeber, muß das komplette Fördermodul mit kraftstoffgefülltem Reservetopf aus dem Kraftstofftank ausgebaut werden, wobei es durch ungeschickte Handhabung zum Auslaufen von Kraftstoff aus dem Reservetopf kommen kann, was zur Verunreinigung der Umgebung führt. Dies ist insbesondere dann problematisch, wenn der Ausbau des Fördermoduls konzeptbedingt im Innern des Fahrgastraums vorgenommen werden muß.

### Vorteile der Erfindung

Die erfindungsgemäße Fördervorrichtung mit den kennzeichnenden Merkmalen des Anspruchs 1 hat den Vorteil, daß sowohl mit der Demontage der Fördervorrichtung sich der Reservetopf automatisch entleert, und zwar bereits dann, wenn sich die Fördervorrichtung noch im Innern des Kraftstofftanks befindet; mit Herausnehmen der Fördervorrichtung aus dem Kraftstofftank ist der Reservetopf völlig kraftstoffentleert, so daß die angesprochene Gefahr der Verunreinigung durch ausfließenden Kraftstoff zuverlässig gebannt ist; und daß auch beim Wiedereinbau der Fördervorrichtung in den Kraftstofftank die Sperrmittel für ein selbsttätiges Schließen der Ablauföffnung sorgen, so daß die zuverlässige Funktion der eingebauten Fördervorrichtung gewährleistet bleibt.

Durch die in den weiteren Ansprüchen aufgeführten Maßnahmen sind vorteilhafte Weiterbildungen und Verbesserungen der im Anspruch 1 angegebenen Fördervorrichtung möglich.

Gemäß einer vorteilhaften Ausführungsform der Erfindung ist die Anordnung des Reservetopfs im Kraftstofftank konstruktiv so festgelegt, daß der Reservetopf in seiner Endposition auf dem Boden des Kraftstofftanks aufsitzt. Die Ablauföffnung ist im Topfboden angeordnet und das Schließen der Ablauföffnung durch die Sperrmittel wird durch Aufsetzen des Reservetopfs auf den Tankboden bewirkt. Mit Abheben des Reservetopfs vom Tankboden geben die Sperrmittel die Ablauföffnung wieder frei. Diese konstruktive Gestaltung hat den Vorteil, daß die Montage und die Demontage der Fördervorrichtung sich einfach bewerkstelligen lassen und die Sperrmittel für das Verschließen und Öffnen der Ablauföffnung mit geringem technischen Aufwand realisiert werden können, wobei sichergestellt ist, daß die Entleerung des Reservetopfs weitgehend abgeschlossen ist, bevor die Fördervorrichtung durch die Demontageöffnung im Kraftstofftank hindurchgehoben wird.

Gemäß einer bevorzugten Ausführungsform der Erfindung sind die Sperrmittel von einem die Ablauföffnung im Topfboden umschließenden Dichtungsring gebildet, der über die äußere Bodenfläche des Bodens axial vorsteht und in der Endposition des Reservetopfs sich auf den Tankboden aufpreßt. Auf diese Weise können die Sperrmittel zum Schließen und Freigeben der Ablauföffnung mit minimalem Konstruktionsaufwand realsiert werden.

Gemäß einer alternativen Ausführungsform der Erfindung sind die Sperrmittel von einem auf der Außenseite des Topfbodens angeordneten, die Ablauföffnung überdeckenden Dichtelement gebildet, wobei das Dichtelement am Topfboden vertikal beweglich so ausgebildet ist, daß es mit Aufsetzen des Reservetopfs auf den Tankboden auf die Ablauföffnung aufgepreßt wird und mit Abheben des Reservetopfs vom Tankboden von der Ablauföffnung abfällt. Eine solche Realisierung der Sperrmittel führt zu einer hohen Dichtwirkung im Einbauzustand der Fördervorrichtung, die auch von Einbautoleranzen evtl., Verspannungen des Reservetopfs am Kraftstofftank etc., weitgehend unbeeinflußt ist.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Längsschnitt eines Kraftstofftanks mit eingesetzter Fördervorrichtung,
- Fig. 2 und 3: jeweils ausschnittweise eine in einen Kraftstofftank eingesetzte Fördervorrichtung in ihrer Endposition (Fig. 2) bzw. in einer aus der Endposition abgehobenen Position (Fig. 3).

### Beschreibung der Ausführungsbeispiele

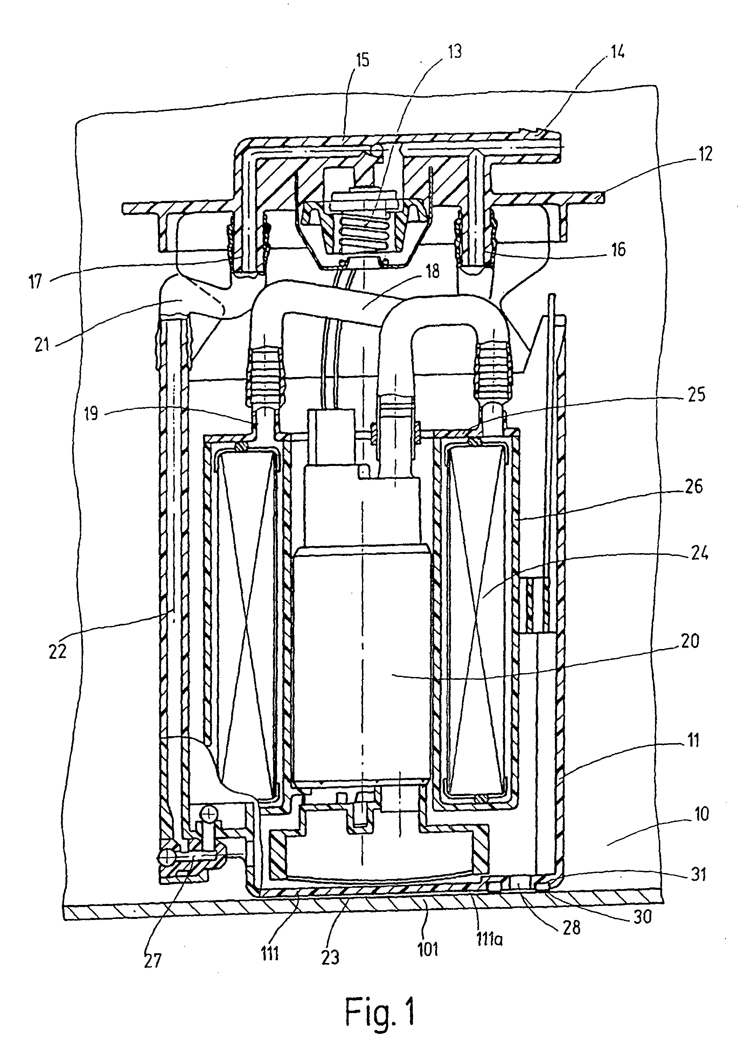

In Fig. 1 ist ausschnittweise ein Kraftstofftank 10 im Längsschnitt dargestellt, in den eine Vorrichtung zum Fördern von Kraftstoff, 1 auch Förderaggregat oder Fördermodul genannt, eingesetzt und in der in Fig. 1 dargestellten Endposition im Kraftstofftank 10 mit hier nicht dargestellten Mitteln befestigt ist. Die Kraftstoffördervorrichtung umfaßt einen Reservetopf 11, dessen Topföffnung mit einem Flansch 12 verschließbar ist. Der Flansch 12 weist in bekannter Weise einen Druckregler 13 sowie einen Anschlußstutzen 14 für eine zur Brennkraftmaschine führende Kraftstoff-Förderleitung und einen Anschlußstutzen 15 für eine von der Brennkraftmaschine kommende Kraftstoff-Rücklaufleitung auf. Die Anschlußstutzen 14,15 ragen mit Rohrstücken 16,17 durch den Flansch 12 hindurch bis ins Innere des Reservetopfes 11. Auf das Rohrstück 16 ist ein Druckschlauch 18 aufgeschoben, der den Anschlußstutzen 14 mit einem Druckstutzen 19 einer im Reservetopf 11 axial und radial unverschieblich aufgenommenen Kraftstofförderpumpe 20 verbindet. Auf das Rohrstück 17 ist ein Verbindungsschlauch 21 aufgeschoben, der den Anschlußstutzen 15 mit einem im Reservetopf 11 ausgebildeten Tauchrohr 22 verbindet, das nahe dem Boden 111 des Reservetopfs 11 mündet. Die elektromotorisch angetriebene Förderpumpe 20 saugt über einen auf ihrer Saugseite angeordneten Kraftstoff-Vorfilter 23 Kraftstoff aus dem Reservetopf 11 an und pumpt diesen über einen ihrer Druckseite nachgeordneten Kraftstoff-Hauptfilter 24 in den Druckstutzen 19. Förderpumpe 20, Vorfilter 23 und Hauptfilter 24 sind in einem von einem Filterdeckel 25 abgeschlossenen Filtergehäuse 26 aufgenommen, wobei der Druckstutzen 19 durch den Filterdeckel 25 hindurchragt. Die Befüllung des Reservetopfs 11 mit Kraftstoff aus dem Kraftstofftank 10 erfolgt mittels einer Saugstrahlpumpe 27, die von dem aus dem Tauchrohr 22 austretenden Kraftstoff-Rücklaufstrom betrieben wird. Bei Betrieb der Brennkraftmaschine fördert die von einem Elektromotor angetriebene Kraftstoff-Förderpumpe 20 Kraftstoff aus dem Reservetopf 11 über den Druckstutzen 19 und den Druckschlauch 18 zu dem Anschlußstutzen 14 und weiter über die an den Anschlußstutzen 14 angeschlossene Förderleitung zu der Brennkraftmaschine. Dort nicht verbrauchter Kraftstoff fließt über die Rücklaufleitung dem damit verbundenen Anschlußstutzen 15 zu und strömt über den Verbindungsschlauch 21 in das Tauchrohr 22 ab. Der am Tauchrohr 22 austretende Kraftstoffstrom erzeugt in der Saugstrahlpumpe 27 einen Unterdruck, durch welche Kraftstoff aus dem Kraftstofftank 10 in den Reservetopf 11 gefördert wird.

Um bei Reparaturarbeiten an der Fördervorrichtung diese aus dem leeren Kraftstofftank 10 mit entleertem Reservetopf 11 herausnehmen zu können, ist der Reservetopf 11 mit einer Ablauföffnung 28 zur Topfentleerung versehen, die mittels geeigneter Sperrmittel in der betriebsbereiten Endposition des Reservetopfs 11 im Kraftstofftank 10 verschlossen und mit Herausnahme des Reservetopfs 11 aus dieser Endposition automatisch freigegeben wird.

Bei dem in Fig. 1 dargestellten Ausführungsbeispiel der Kraftstoff-Fördervorrichtung ist in deren Endposition im Kraftstoffbehälter 10 der Reservetopf 11 unmittelbar auf dem Boden 101 des Kraftstofftanks 10 aufgesetzt und am Kraftstofftank 10 befestigt. Die Ablauföffnung 28 ist im Topfboden 111 des Reservetopfs 11 angeordnet, und die Sperrmittel werden durch Aufsetzen des Reservetopfs 11 auf den Tankboden 101 bzw. mit Abheben des Reservetopfs 11 vom Tankboden 101 wirksam und dichten die Ablauföffnung 28 ab bzw. geben die Ablauföffnung 28 frei.

In dem Ausführungsbeispiel der Fig. 1 sind die Sperrmittel durch einen Dichtungsring 30 realisiert, der in eine die Ablauföffnung 28 umschließende Ringnut 31 eingelegt ist, die auf der äußeren Bodenfläche 111a des Topfbodens 111 eingebracht ist. Der Dichtungsring 10 steht etwas axial über die äußere Bodenfläche 111a des Topfbodens 111 vor und wird beim Aufsetzen des Reservetopfes 11 auf den Tankboden 101 und bei dessen Befestigung auf den Topfboden 101 aufgepreßt, so daß er die Ablauföffnung 28 hermetisch abdichtet.

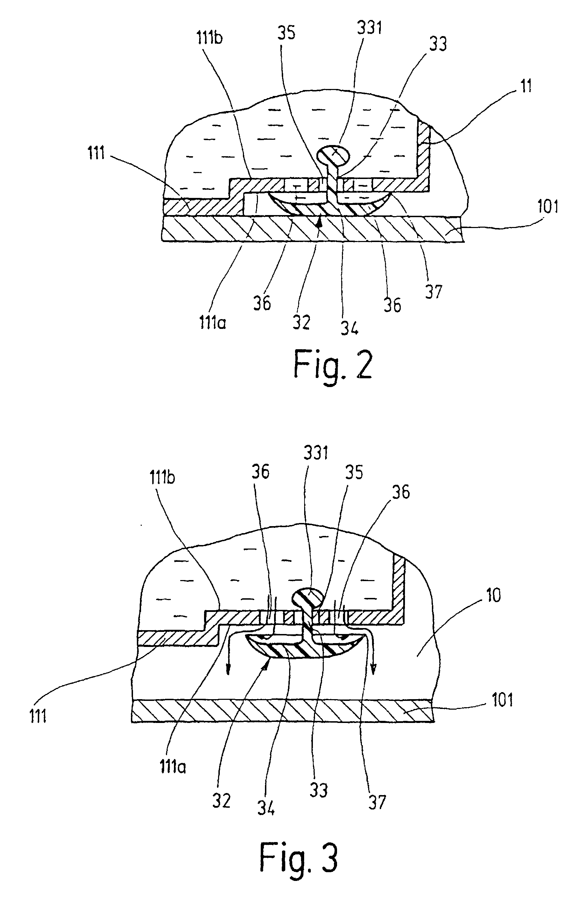

Im modifizierten Ausführungsbeispiel der Fördervorrichtung gemäß Fig. 2 und 3 werden die Sperrmittel mittels eines Dichtelements 32 realisiert, das auf der Außenseite des Topfbodens 111 angeordnet und am Topfboden 111 vertikal beweglich festgelegt ist. Das Dichtelement 32 ist pilzförmig ausgebildet, wobei der Pilzstiel 33 an seinem vom Pilzkopf 34 abgekehrten freien Ende einstückig eine elastische Stielverdickung 331 trägt, mit welcher das Dichtelement 32 in eine im Topfboden 111 vorgesehene Halteöffnung 35 eingeclipst werden kann. Die Ablauföffnung ist hier auf eine Mehrzahl von Durchgangsbohrungen 36 verteilt, die auf einem um die Halteöffnung 35 konzentrischen Teilerkreis angeordnet sind.

Zur Montage wird die Stielverdickung 331 des pilzförmigen Elements 32 durch die Halteöffnung 35 hindurchgepreßt, so daß sie dann die Halteöffnung 35 auf der inneren Bodenfläche 111b des Topfbodens 11 übergreift. Am Außenrand der dem Tankboden 101 zugekehrten Unterseite des Pilzkopfes 34 ist eine Dichtkante 37 ausgebildet, die sich beim Andrücken des Dichtelements 32 an den Topfboden 111 auf die äußere Bodenfläche 111a aufdrückt und alle Durchgangsbohrungen 36 gegenüber dem Kraftstofftank 10 abdichtet. Damit eine gute Dichtwirkung zustande kommt, ist der Durchmesser der umlaufenden Dichtkante 37 wesentlich größer gemacht als die Summe aus dem Durchmesser des Teilerkreises der Durchgangsbohrung 36 und dem doppelten Durchmesser einer Durchgangsbohrung 36. In der in Fig. 2 dargestellten Endposition des Reservetopfes 11 innerhalb des Kraftstofftanks 10 wird das Dichtelement 32 von dem Tankboden 101 auf den Topfboden 111 aufgedrückt und dichtet die aus den Durchgangsbohrungen 36 bestehende Ablauföffnung ab. Beim Aufpressen des Pilzkopfes 34 auf den Topfboden 111 schiebt sich der Pilzstiel 33 in das Topfinnere hinein, wobei die Stielverdickung 331 von der inneren Bodenfläche 111b des Topfbodens 111 abhebt (Fig. 2). Wird der Reservetopf 11 nach Lösen seiner Befestigung am Kraftstofftank 10 angehoben, so fällt das Dichtelement 32 von der äußeren Bodenfläche 111a des Topfbodens 111 ab. Die Abfallbewegung des Dichtelements 32 wird gestoppt von der Stielverdickung 331 in dem Moment, in dem diese sich an die innere Bodenfläche 111b des Topfbodens 111 anlegt. Durch das Abfallen des Pilzkopfes 34 vom Topfboden 111 sind die Durchgangsbohrungen 36 freigegeben und Kraftstoff kann aus dem Reservetopf 11 in den Kraftstofftank 10 abströmen.

Um eine plane Auflage des Reservetopfs 11 auf dem Tankboden 111 des Kraftstofftanks 10 zu gewährleisten, ist der Topfboden 111 im Bereich der Halteöffnung 35 und der Durchgangsbohrungen 36 eingesenkt, wobei die Tiefe der Einsenkung geringfügig kleiner ist als die axiale Dicke des Pilzkopfes 34, damit der Pilzkopf 34 noch mit ausreichendem Anpreßdruck vom Tankboden 101 an den Topfboden 111 angepreßt wird.

## Patentansprüche

1. Vorrichtung zum Fördern von Kraftstoff aus einem Kraftstofftank, mit einem in den Kraftstofftank (10) einsetzbaren und in einer Endposition festlegbaren Reservetopf (11), der aus dem Kraftstofftank (10) mit Kraftstoff füllbar ist, mit einer im Reservetopf (11) aufgenommenen Kraftstoff-Förderpumpe (20), die Kraftstoff aus dem Reservetopf (11) ansaugt und in eine Kraftstoff-Förderleitung pumpt, wobei der Reservetopf (11) mit einer Ablauföffnung (28;36) versehen ist **dadurch gekennzeichnet, daß** Sperrmittel vorgesehen sind, die die Ablauföffnung (28;36) in der Endposition des Reservetopfs (11) verschließen und mit Verlassen der Endposition freigeben.

2. Vorrichtung nach Anspruch 1, **dadurch gekennzeichnet, daß** der Reservetopf (11) in seiner Endposition auf dem Boden (101) des Kraftstofftanks (10) aufsitzt, daß die Ablauföffnung (28;36) im Topfboden (111) angeordnet ist und daß das Schließen der Ablauföffnung (28;36) durch die Sperrmittel durch Aufsetzen des Reservetopfs (11) auf den Topfboden (101) und das Öffnen der Ablauföffnung (28;36) durch die Sperrmittel durch Abheben des Reservetopfs (11) vom Tankboden (101) bewirkt wird.

3. Vorrichtung nach Anspruch 2, **dadurch gekennzeichnet, daß** die Sperrmittel von einem die Ablauföffnung (28) im Topfboden (111) umschließenden Dichtungsring (30) gebildet sind, der über die äußere Bodenfläche (111a) des Topfbodens (111) vorsteht und in der Endposition des Reservetopfs (11) sich auf den Tankboden (101) aufpreßt.

4. Vorrichtung nach Anspruch 3, **dadurch gekennzeichnet, daß** der Dichtungsring (30) in einer die Ablauföffnung (28) umschließenden Ringnut (31) einliegt, die in die äußere Bodenfläche (111a) des Topfbodens (111) eingebracht ist.

5. Vorrichtung nach Anspruch 2, **dadurch gekennzeichnet, daß** die Sperrmittel von einem auf der Außenseite des Topfbodens angeordneten, die Ablauföffnung (36) überdeckenden Dichtelement (32) gebildet sind, das am Topfboden (111) vertikal beweglich so gehalten ist, daß es mit Aufsetzen des Reservetopfs (11) auf den Tankboden (101) auf die Ablauföffnung (36) aufgepreßt wird und mit Abheben des Reservetopfs (11) vom Tankboden (101) von der Ablauföffnung (36) abfällt.

6. Vorrichtung nach Anspruch 5, **dadurch gekennzeichnet, daß** das Dichtelement (32) eine umlaufende elastische Dichtkante (37) aufweist, die sich in der Endposition des Reservetopfs (11) im Radialabstand von der Ablauföffnung (36) auf die äußere Bodenfläche (111a) des Topfbodens (111) aufpreßt.

7. Vorrichtung nach Anspruch 5 oder 6, **dadurch gekennzeichnet, daß** das Dichtelement (32) in eine im Topfboden (111) vorgesehene Halteöffnung (35) eingeclipst ist.

8. Vorrichtung nach Anspruch 7, **dadurch gekennzeichnet, daß** das Dichtelement (32) pilzförmig ausgebildet ist, daß der Pilzstiel (33) an seinem freien Ende eine elastische Stielverdickung (331) trägt, die durch die Halteöffnung (35) hindurchpreßbar ist und diese auf der inneren Bodenfläche (111b) des Topfboden (111) hintergreift, und daß die Dichtkante (37) am Außenrand der dem Topfboden (111) zugekehrten Unterseite des Pilzkopfes (34) ausgebildet ist.

9. Vorrichtung nach Anspruch 8, **dadurch gekennzeichnet, daß** die Ablauföffnung auf mehrere, auf einem Teilerkreis angeordnete Durchgangsbohrungen (36) im Topfboden (111) aufgeteilt ist und daß der Teilerkreis konzentrisch zur Halteöffnung (35) angeordnet ist.

10. Vorrichtung nach Anspruch 9, **dadurch gekennzeichnet, daß** der Durchmesser der umlaufenden Dichtkante (37) wesentlich größer ist als die Summe aus dem Durchmesser des Teilerkreises und dem doppelten Durchmesser einer Durchgangsbohrung (36).

## Claims

1. Device for the conveyance of fuel out of a fuel tank, with a reserve pot (11) which is capable of being inserted into the fuel tank (10) and of being secured in an end position and which can be filled with fuel from the fuel tank (10), with a fuel feed pump (20) which is received in the reserve pot (11) and which sucks in fuel from the reserve pot (11) and pumps it into a fuel feed line, the reserve pot (11) being provided with an outflow orifice (28; 36), **characterized in that** blocking means are provided which close the outflow orifice (28; 36) in the end position of the reserve pot (11) and open said outflow orifice when the end position is left.

2. Device according to Claim 1, **characterized in that** the reserve pot (11), in its end position, sits on the bottom (101) of the fuel tank (10), **in that** the outflow orifice (28; 36) is arranged in the pot bottom (111), and **in that** the closing of the outflow orifice (28; 36) is brought about by the blocking means by the reserve pot (11) being placed onto the tank bottom (101) and the opening of the outflow orifice (28; 36) is brought about by the blocking means by the reserve pot (11) being lifted off from the tank bottom (101).

3. Device according to Claim 2, **characterized in that** the blocking means are formed by a sealing ring (30) which surrounds the outflow orifice (28) in the pot bottom (111) and which projects above the outer bottom surface (111a) of the pot bottom (111) and, in the end position of the reserve pot (11), is pressed onto the tank bottom (101).

4. Device according to Claim 3, **characterized in that** the sealing ring (30) is seated in an annular groove (31) which surrounds the outflow orifice (28) and which is introduced into the outer bottom surface (111a) of the pot bottom (111).

5. Device according to Claim 2, **characterized in that** the blocking means are formed by a sealing element (32) which is arranged on the outside of the pot bottom and covers the outflow orifice (36) and which is held vertically moveably on the pot bottom (111) in such a way that said sealing element is pressed onto the outflow orifice (36) when the reserve pot (11) is placed onto the tank bottom (101) and falls down from the outflow orifice (36) when the reserve pot (11) is lifted off from the tank bottom (101).

6. Device according to Claim 5, **characterized in that** the sealing element (32) has a peripheral elastic sealing edge (37) which, in the end position of the reserve pot (11), is pressed, at a radial distance from the outflow orifice (36), onto the outer bottom surface (111a) of the pot bottom (111).

7. Device according to Claim 5 or 6, **characterized in that** the sealing element (32) is snapped into a holding orifice (35) provided in the pot bottom (111).

8. Device according to Claim 7, **characterized in that** the sealing element (32) is of mushroom-shaped design, **in that** the mushroom stem (33) carries at its free end an elastic stem thickening (331) which can be pressed through the holding orifice (35) and which engages behind the latter on the inner bottom surface (111b) of the pot bottom (111), and **in that** the sealing edge (37) is formed at the outer edge of the underside of the mushroom head (34), said underside facing the pot bottom (111).

9. Device according to Claim 8, **characterized in that** the outflow orifice is apportioned to a plurality of passage bores (36) in the pot bottom (111) which are arranged on a divisor circle, and **in that** the divisor circle is arranged concentrically to the holding orifice (35).

10. Device according to Claim 9, **characterized in that** the diameter of the peripheral sealing edge (37) is substantially larger than the sum of the diameter of the divisor circle and double the diameter of one passage bore (36).

## Revendications

1. Dispositif d'alimentation en carburant à partir d'un réservoir comportant un réservoir intermédiaire (11) qui se place dans le réservoir de carburant (10) et se fixe dans une position d'extrémité, ce réservoir intermédiaire en forme de pot se remplissant en carburant à partir du réservoir (10), avec une pompe d'alimentation en carburant (10) logée dans le réservoir en forme de pot (11) qui aspire le carburant du réservoir en forme de pot ou réservoir intermédiaire (11) et le pompe dans une conduite d'alimentation en carburant, le réservoir intermédiaire (11) étant muni d'un orifice de sortie (28, 36),
**caractérisé par**
des moyens de blocage qui ferment l'orifice de sortie (28, 36) en position de fin de course du réservoir intermédiaire (11) et le libèrent lorsqu'on quitte la position de fin de course.

2. Dispositif selon la revendication 1,
**caractérisé en ce que**
le réservoir intermédiaire (11) s'appuie dans sa position de fin de course contre le fond (110) du réservoir de carburant (10),
l'orifice de sortie (28, 36) étant prévu dans le fond (111) du pot et
la fermeture de l'orifice de sortie (28, 36) par des moyens de blocage étant assurée par la mise en appui du réservoir intermédiaire (11) contre le fond (101) du réservoir intermédiaire et l'ouverture de l'orifice de sortie (28, 36) par le moyen de blocage par le soulèvement du réservoir (11) en forme de pot par rapport au fond (101) du réservoir.

3. Dispositif selon la revendication 2,
**caractérisé en ce que**
les moyens de blocage sont constitués par un joint d'étanchéité (30) qui entoure l'orifice de sortie (28) du fond (111) du réservoir, ce joint étant en saillie par rapport à la surface de fond (111a) extérieure du fond (111) du réservoir intermédiaire et étant pressé en position de fin de course du réservoir intermédiaire (11) contre le fond (101) du réservoir.

4. Dispositif selon la revendication 3,
**caractérisé en ce que**
le joint d'étanchéité (30) est placé dans une rainure annulaire (31) entourant l'orifice de sortie (28), cette rainure étant réalisée dans la surface de fond extérieure (111a) du fond (111) du réservoir intermédiaire (réservoir en forme de pot).

5. Dispositif selon la revendication 2,
**caractérisé en ce que**
les moyens de blocage sont constitués par un élément d'étanchéité (32) prévu sur le côté extérieur du fond du réservoir intermédiaire et recouvrant l'orifice de sortie (36), cet élément d'étanchéité étant tenu mobile verticalement contre le fond (111) du réservoir intermédiaire pour que la venue en appui du réservoir intermédiaire (11) contre le fond (101) du réservoir pressé, l'orifice de sortie (36) et qu'avec le soulèvement du réservoir (11) intermédiaire, par rapport au fond (101) il y a décrochement par rapport à l'orifice de sortie (36).

6. Dispositif selon la revendication 5,
**caractérisé en ce que**
l'élément d'étanchéité (32) présente une arête d'étanchéité (37) élastique périphérique pressée en position de fin de course du réservoir intermédiaire (11), à distance radiale de l'orifice de sortie (36) sur la surface de fond (111a) extérieure du fond (111) du réservoir intermédiaire.

7. Dispositif selon l'une quelconque des revendications 5 ou 6,
**caractérisé en ce que**
l'élément d'étanchéité (32) est enclipsé dans un orifice de fixation (35) prévu dans le fond (111) du réservoir intermédiaire.

8. Dispositif selon la revendication 7,
**caractérisé en ce que**
l'élément d'étanchéité (32) est en forme de champignon, la tige (33) du champignon portant à son extrémité libre un renforcement (331) qui se presse à travers l'orifice de fixation (35) et vient prendre derrière celui-ci contre la surface intérieure (111b) du fond (111) du pot et
l'arête d'étanchéité (37) est réalisée au niveau du bord extérieur de la face inférieure de la tête en forme de champignon (34) tournée vers le fond (111) de la pièce en forme de pot.

9. Dispositif selon la revendication 8,
**caractérisé en ce que**
l'orifice de sortie est subdivisé en plusieurs perçages traversants (36) répartis suivant un cercle primitif dans le fond (111) du pot et le cercle primitif est concentrique à l'orifice de fixation (35).

10. Dispositif selon la revendication 9,
**caractérisé en ce que**
le diamètre du joint d'étanchéité (37) périphérique est beaucoup plus grand que la somme du diamètre du cercle primitif et du double diamètre d'un orifice traversant (36).
